# EUROPEAN PATENT APPLICATION

(11) **EP 3 348 529 A1**
(43) Date of publication of application: **18.07.2018**
(21) Application number: 17151784.0
(22) Date of filing: 17.01.2017
(51) Int. Cl.: C03C 27/10, C08K 5/101, E06B 3/663, C09K 3/10

(54) **SEALER COMPOSITION FOR EDGE SEALING OF INSULATION GLASS**

(71) Applicant: Dana Lim A/S, 4600 Koge (DK)
(72) Inventor: Thraner, Andreas Nicolaj, 4735 Mern (DK)
(74) Representative: Kinkeldey, Daniela

(57) **Abstract**

The present invention relates to a one-component sealer composition (5) comprising (a) at least one silane modified polymer as a binder and (b) at least one benzoate as a plasticizer, wherein the sealer composition (5) is for use in contact with edge sealing of insulation glass.

## Description

The present invention relates to a one-component sealer composition (5) comprising (a) at least one silane modified polymer as a binder and (b) at least one benzoate as a plasticizer, wherein the sealer composition (5) is for use in contact with edge sealing of insulation glass.

### BACKGROUND OF THE INVENTION

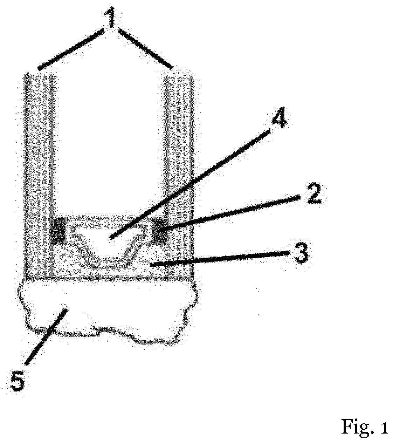

Window manufacturers are in an increasing number of situations applying a sealer in direct contact with the edge sealing of insulation glass (IG). Edge sealing is a term covering two adhesives called primary sealant (2) and secondary sealant (3) (see e.g. Fig. 1). Sealing of the IG is done for extra security of the window to prevent burglar intrusion or it is done for a structural transfer of mechanical forces from the insulation glass to the window frame, called window bonding, or any other situation where it is necessary to apply a sealer.

As explained *inter alia* in US 2009/0304945 A1, insulation glass (IG) units are typically used because of their superior resistance to heat flow as compared to single glass windows. Usually, they include at least two panes of glass (1). The panes (1) are separated by a spacer (4) which ensures the desired distance between the panes of glass (1). The spacer (4) is adhesively bonded to the two panes of glass (1) and creates a primary seal using a so called primary sealant (2) between the two panes of glass (1). For the primary sealant (2) formulations based on polyisobutylene and/or butyl rubber are often used. The spacer (4) in an IG unit is inset from the peripheral edges of the glass panes (1) leading to a space bounded on two sides by the glass panes (1) and on one side by the spacer. In the manufacturing of IG units, this space is filled with an adhesive which forms the secondary seal using a so called secondary sealant (3). The primary sealant (2) and the secondary sealant (3) are used to produce a sufficiently strong bond between the insulating glass arrangement.

When the IG unit is glued into a window frame or sash, a sealer composition (5) may fill the peripheral gap between the edge regions of the IG and the frame enclosing the insulating glass (see Fig. 1). Here, the secondary seal serves to bond the frame to the IG unit via the sealer composition (5).

The challenge of applying/using a sealer composition (5) in direct contact with the edge sealing in the IG is the potential disturbance of the edge sealing caused by the applied sealer composition (5).

Today, the industry has approached this disturbance (compatibility) risk/issue by a test procedure developed by the industry - the Rosenheim IFT "Usability of sealants", part 1, "Testing of materials in contact with the edge-sealing of insulating glass units". This procedure, however, is a qualitative test with focus on potential disturbance/failure of the IG-unit caused by migration or a chemical reaction from the sealer composition (5) into or on the edge sealing.

It was, however, surprisingly found that a major disturbance is in fact caused by a migration of substance from the edge sealing into the sealer composition (5). This is opposite to the typical expectation of a migration of substance from the sealer composition (5) into the edge sealing.

Migration of substance from the edge sealing into the sealer composition (5) leads to a volume shrinkage of the edge sealing. The migration is more precisely coming from the part of the edge sealing called the secondary sealant (3). Migration of substance from the secondary sealant (3) is causing volume shrinkage in the edge sealing that results in a compression in the edge sealing which again leads to a poorer quality IG-unit or in visual or fatal failures. The visible failure is for instance a flattening/squeezing of the primary sealant (2) in the edge sealing, which can move into the visible area of the window. Another failure is a hardening of the secondary sealant (3), which leads to reduced flexibility of the IG which can lead to breaking glass or cracking edge sealing.

Reduced migration leads to prolonged life of the IG.

Products on the market today which are being used in applications with direct contact to the edge sealing are causing a relatively high level of migration from the secondary sealant (3) into the sealer composition (5).

The migration level has not been measured previously since it is not part of the test procedure as described in the Rosenheim test. Therefore, this new finding has also included development of a quantitative test method to identify the migration level quantitatively.

The new finding is a sealer composition (5) which in this test, in comparison to products used today in direct contact with edge-sealing, demonstrates a significantly reduced migration level from the secondary sealant (3) into this sealer composition (5).

### SUMMARY

It is one object of the invention to provide a sealer composition (5), wherein the sealer composition (5) is for use in contact with edge sealing of insulation glass and which has reduced migration level from the secondary sealant (3) into this sealer composition (5) when in use.

The present invention, thus, provides a one-component sealer composition (5) comprising (a) at least one silane modified polymer as a binder and (b) at least one benzoate as a plasticizer, wherein the sealer composition (5) is for use in contact with edge sealing of insulation glass.

Further, the present invention provides a method of sealing of insulation glass comprising applying a sealer composition (5) as defined herein on an edge sealing of the insulation glass.

Additionally, the present invention provides the use of a sealer composition (5) as defined herein for sealing of insulation glass.

Moreover, the present invention provides a window unit comprising an insulating glass unit and a window sash or window frame, wherein the insulating glass unit comprises
an edge sealing, the edge sealing comprises a primary sealant (2) and a secondary sealant; and
a sealer composition (5) as defined herein;
wherein the sealer composition (5) is applied between the secondary sealant (3)and the window sash or window frame.

### BRIEF DESCRIPTION OF THE DRAWINGS

Fig. 1 shows a preferred embodiment according to the invention.

### DESCRIPTION OF THE EMBODIMENTS

Before the present invention is described in detail below, it is to be understood that this invention is not limited to the particular methodology, protocols and reagents described herein as these may vary. It is also to be understood that the terminology used herein is for the purpose of describing particular embodiments only, and is not intended to limit the scope of the present invention which will be limited only by the appended items. Unless defined otherwise, all technical and scientific terms used herein have the same meanings as commonly understood by one of ordinary skill in the art.

Throughout this specification and the items which follow, unless the context requires otherwise, the word "comprise", and variations such as "comprises" and "comprising", will be understood to imply the inclusion of a stated integer or step or group of integers or steps but not the exclusion of any other integer or step or group of integers or steps. In the following passages different aspects of the invention are defined in more detail. Each aspect so defined may be combined with any other aspect or aspects unless clearly indicated to the contrary. In particular, any feature indicated as being preferred, typical, usually used or advantageous may be combined with any other feature or features indicated as being preferred, typical, usually used or advantageous.

As used herein, the term "sealer", sometimes in the art also referred to as "glue" or adhesive, has the same meanings as commonly understood by one of ordinary skill in the art.

As used herein, the terms "edge sealing of the insulation glass", "primary sealant" and "secondary sealant" have the same meanings as commonly understood by one of ordinary skill in the art as inter alia already explained above. In addition, the concept of edge sealing using a primary sealant and secondary sealant is explained *inter alia* in US 2009/0304945 A1, which is incorporated herein by reference in its entirety.

As used herein, the term "silane modified polymer", sometimes in the art also referred to as "SMP" or "silyl modified polymer", has the same meanings as commonly understood by one of ordinary skill in the art. Typical silane modified polymers are described in US 2002/0115770 A1, which is incorporated herein by reference in its entirety. The silane modified polymer may be a "silane endcapped polymer" or a "silane terminated polymer".

Some documents are cited throughout the text of this specification. Each of the documents cited herein (including all patents, patent applications, scientific publications, manufacturer's specifications, instructions, DIN norms etc.), whether supra or infra, are hereby incorporated by reference in their entirety. Nothing herein is to be construed as an admission that the invention is not entitled to antedate such disclosure by virtue of prior invention.

As mentioned, the invention provides a one-component sealer composition (5) comprising (a) at least one silane modified polymer as a binder and (b) at least one benzoate as a plasticizer. The sealer composition (5) is for use in contact with edge sealing of insulation glass, in particular for use in direct contact with edge sealing of insulation glass.

Moreover, the sealer composition (5) is typically for use in direct contact with edge sealing of insulation glass, wherein the edge sealing of the insulation glass comprises a primary sealant (2) and a secondary sealant (3) and wherein the sealer composition (5) is applied on the secondary sealant. The insulation glass is then typically bonded to a window sash or window frame with the sealer composition (5), wherein the sealer composition (5) is applied between the secondary sealant (3) and the window sash or window frame. Or in other words, the sealer composition (5) is applied between the secondary sealant (3) and the window sash or window frame with the secondary sealant (3) via the sealer composition (5).

Typically, the sealer composition (5) as defined herein comprises 5 to 70 % by weight of said plasticizer, preferably 7 to 65 % by weight or 10, 15, 20, 25, 30, 35, 40, 45, 50, 55 or 60 % by weight. The plasticizer may be selected from the group consisting of benzoic acid esters of diethylene glycol, dipropylene glycol, ethylene glycol, triethylene glycol, tetraethylene glycol, propylene glycol, tripropylene glycol, tetrapropylene glycol, 2,2,4-trimethyl-1,3-pentane diol, isodecanol, 2-ethylhexnol, hydroxypivalic acid neopentyl glycol esters, and mixtures thereof; and is preferably dipropylene glycoldibenzoate or a mixture of diethylene glycolbenzoate and dipropylene glycoldibenzoate.

The sealer composition (5) as defined herein comprises typically 10 to 50 %, preferably 15 to 40 % or 15, 20, 25, 30, 35 or 40 % by weight of said binder, wherein the sum of the components of the sealer composition (5) totals 100 % by weight. It is typically a moisture curing binder. Typical silane modified polymers to be used as a binder are described in US 2002/0115770 A1, which is incorporated herein by reference in its entirety. The silane modified polymer may be selected from the group consisting of silane modified polyethers, preferably silane modified polyethylene glycol, silane modified polypropylene glycol or silane modified poly(ethylene-co-propylene) glycol, silane modified polyurethanes and silane modified polyesters, and any combination thereof. The silane modified polymer may also be a copolymer of monomers or polymers mentioned herein. The binder may further be selected from the group consisting of trimethoxy silane, dimethoxy silane, trimethoxy silylpropylcarbamate modified, preferably endcapped or terminated, polyethers, polyurethanes and polyesters. Preferably, the binder is a silane endcapped polyether, preferably trimethoxy silane endcapped polyether, preferably a trimethoxy silylpropylcarbamate endcapped polypolyethylene glycol. Typically, the binder has a viscosity of 5000 to 15000 mPa·s, preferably 7000 to 12000 mPa·s, more preferably 10000 mPa·s or about 10000 mPa·s, as measured according to DIN 51562.

The sealer composition (5) as defined herein may further comprise (c) at least one crosslinker. It comprises typically 1 to 10 %, preferably 2 to 8 %, 3 to 7 %, 3, 4, 5, 6 or 9 % by weight of said crosslinker, wherein the sum of the components of the sealer composition (5) totals 100 % by weight. The crosslinker may be selected from the group consisting of vinyltrimethoxysilane, 3-aminopropyltrimethoxysilane, N-(2-Aminoethyl)-3-aminopropyltrimethoxysilane, N-Cyclohexyl-3-aminopropyltrimethoxysilane, N-Cyclohexylaminomethyltriethoxysilane, 3-Aminopropyltriethoxysilane, 3-(2-Aminomethylamino) Propyltriethoxysilane, N-(2-Aminoethyl)-3-aminopropylmethyldimethoxysilane, 3-Aminopropyltrimethoxysilane, Aminopropyltrimethoxysilane, 3-Ureidopropyltrimethoxysilane, vinyltrimethoxysilane, vinyldimethoxymethylsilane, vinyltriethoxysilane, vinyltriacetoxysilane, phenyltrimethoxysilane, and any combination thereof. Typically, the crosslinker is vinyltrimethoxysilane, 3-aminopropyltrimethoxysilane, and any combination thereof.

The sealer composition (5) as defined herein may further comprise (d) at least one catalyst. It comprises typically 0.1 to 3 % by weight, preferably 0.3 to 2 %, 0.4 to 1 %, 0.4, 0.5, 0.6, 0.7, 0.8, 0.9 or 1 % by weight of said catalyst, wherein the sum of the components of the sealer composition (5) totals 100 % by weight. The catalyst may be selected from the group consisting of tin catalysts, platinum catalysts, titanat catalysts, zirconium catalysts, zink catalysts, bismuth catalysts, iron catalysts, cupper catalysts, nickel catalysts, amine catalysts, and any combination thereof. Typically, the catalyst is dibutyltin diacetyl acetonate or dioctyltin dicarboxylate. Further suitable catalyst may be PC CAT® Polyurethane Catalysts.

The sealer composition (5) as defined herein may further comprise (e) at least one filler. It comprises typically 40.5 to 60.5 %, preferably 45.5 to 56.5 %, 45.5 to 55.5 %, 45.5, 46.5, 47.5, 48.5, 49.5, 50.5, 51.5, 52.5, 53.5, 54.5 or 55.5 % by weight of said filler, wherein the sum of the components of the sealer composition (5) totals 100 % by weight. The filler may be selected from the group consisting of uncoated calcium carbonate, coated calcium carbonate, in particular coated with fatty acids, aluminum hydroxide; uncoated or coated calcium carbonate further including magnesium and/or aluminuim, and mixtures thereof. Typically, the filler is calcium carbonate coated with fatty acids or aluminum hydroxide or a mixture thereof.

The sealer composition (5) as defined herein may further comprise (f) at least one adhesion promoter. It comprises typically 0.5 to 3 % by weight, preferably 0.7 to 2 % or 1 to 1.5 % by weight of said adhesion promoter, wherein the sum of the components of the sealer composition (5) totals 100 % by weight. The adhesion promoter may be selected from the group consisting of 3-aminopropyltrimethoxysilane, N-(2-Aminoethyl)-3-aminopropyltrimethoxysilane, N-Cyclohexyl-3-aminopropyltrimethoxysilane, N-Cyclohexylaminomethyltriethoxysilane, 3-Aminopropyltriethoxysilane, 3-(2-Aminomethylamino)Propyltriethoxysilane, N-(2-Aminoethyl)-3-aminopropylmethyldimethoxysilane, 3-Aminopropyltrimethoxysilane, Aminopropyltrimethoxysilane, 3-Ureidopropyltrimethoxysilane, and any combination thereof. Preferably, the adhesion promoter is 3-aminopropyltrimethoxysilane.

The sealer composition (5) as defined herein may further comprise (g) at least one thickener. It comprises typically 2.5 to 8.5 % by weight, preferably 3.5 to 7.5 %, 4.5 to 6.5 %, or 5.5 % by weight of said thickener, wherein the sum of the components of the sealer composition (5) totals 100 % by weight. The thickener may be selected from the group consisting of polyamide modified derivatives of castor oil, polyamides, inorganic modified derivatives of castor oil, polyolefin modified polyamide, silica; and any combination thereof. Typically, the thickener is a polyamide modified derivative of castor oil and/or silica.

A sealer composition (5) as defined herein typically comprises or consists of (a) at least one silane modified polymer as a binder, (b) at least one benzoate as a plasticizer, (c) at least one crosslinker, (d) at least one catalyst, (e) at least one filler, and (f) at least one adhesion promoter. The components and amounts may be selected from the compounds and amounts as defined above.

Typically, it may consist of 20 % by weight of at least one silane modified polymer as a binder, 20 % by weight of at least one benzoate as a plasticizer, 3 % by weight of at least one crosslinker, 0.5 % by weight of at least one catalyst, 55.5 % by weight of at least one filler, and 1 % by weight of at least one adhesion promoter. Typically, it may also consist of 25 % by weight of at least one silane modified polymer as a binder, 15 % by weight of at least one benzoate as a plasticizer, 3 % by weight of at least one crosslinker, 0.5 % by weight of at least one catalyst, 55.5 % by weight of at least one filler, and 1 % by weight of at least one adhesion promoter. Further, it may consist of 15 % by weight of at least one silane modified polymer as a binder, 25 % by weight of at least one benzoate as a plasticizer, 3 % by weight of at least one crosslinker, 0.5 % by weight of at least one catalyst, 55.5 % by weight of at least one filler, and 1 % by weight of at least one adhesion promoter. Further, it may consist of 15 % by weight of at least one silane modified polymer as a binder, 35 % by weight of at least one benzoate as a plasticizer, 3 % by weight of at least one crosslinker, 0.5 % by weight of at least one catalyst, 45.5 % by weight of at least one filler, and 1 % by weight of at least one adhesion promoter. Moreover, it may consist of 40 % by weight of at least one silane modified polymer as a binder, 10 % by weight of at least one benzoate as a plasticizer, 3 % by weight of at least one crosslinker, 0.5 % by weight of at least one catalyst, 45.5 % by weight of at least one filler, and 1 % by weight of at least one adhesion promoter. The components may be selected from the compounds as defined above.

In addition, a sealer composition (5) as defined herein typically comprises or consists of (a) at least one silane modified polymer as a binder, (b) at least one benzoate as a plasticizer, (c) at least one crosslinker, (d) at least one catalyst, (f) at least one adhesion promoter and (g) at least one thickener. The components and amounts may be selected from the compounds and amounts as defined above.

Typically, it may consist of 30 % by weight of at least one silane modified polymer as a binder, 60 % by weight of at least one benzoate as a plasticizer, 3 % by weight of at least one crosslinker, 0.5 % by weight of at least one catalyst, 5.5 % by weight of at least one thickener, and 1 % by weight of at least one adhesion promoter. The components may be selected from the compounds as defined above.

Further provided herein is a method of producing a sealer composition (5) as defined herein. The method comprises compounding the components of the sealer composition (5). Typically, the compounding is done at room temperature. Typically, the compounding is done as fast as components can be mixed, typically for a total of 2-3 hours. Typically, a vacuum dissolver is used, but also any other suitable compounder may be used. Typically, the components which are present as a liquid are premixed, afterwards the solid components are added.

Further provided herein is a method of producing a sealer composition (5) as defined herein comprising compounding the components of the sealer composition (5) at room temperature, preferably for a total of 2-3 hours, preferably in a vacuum dissolver. Typically, the sealer composition (5) is applied on an edge sealing of the insulation glass, preferably directly. Usually, the edge sealing of the insulation glass comprises a primary sealant (2) and a secondary sealant (3) and the method comprises applying the sealer composition (5) on the secondary sealant (3). Typically, the sealer composition (5) further bonds the insulation glass to a window sash or window frame.

Further provided herein is the use of a sealer composition (5) as defined herein for sealing of insulation glass. Typically, the sealer composition (5) is applied on an edge sealing of the insulation glass, preferably directly. Preferably, the edge sealing of the insulation glass comprises a primary sealant (2) and a secondary sealant (3) and the sealer composition (5) is applied on the secondary sealant (3). Usually, the sealer composition (5) is further used for bonding the insulation glass to a window sash or window frame.

Further provided herein is a window unit comprising an insulating glass unit and a window sash or window frame. Insulation glass (IG) units typically include at least two panes of glass (1). The panes (1) are separated by a spacer (4) which ensures the desired distance between the panes of glass (1). The spacer (4) is adhesively bonded to the two panes of glass (1) and creates a primary seal using the primary sealant (2) between the two panes of glass (1). The spacer (4) is inset from the peripheral edges of the glass panes (1) leading to a space bounded on two sides by the glass panes (1) and on one side by the spacer (4). This space is filled with the secondary sealant (3).

In particular, a window unit is provided herein comprising an insulating glass unit and a window sash or window frame, wherein the insulating glass unit comprises an edge sealing, the edge sealing comprises a primary sealant (2) and a secondary sealant (3); wherein a sealer composition (5) as defined herein is placed at least between the secondary sealant (3) and the window sash or window frame. Typically, the sealer composition (5) bonds the insulating glass unit to the window sash or window frame. Usually, the insulating glass unit further comprises at least two glass panes (1), wherein the insulating glass unit further comprises a spacer (4) placed between the glass panes (1). Preferably, the primary sealant (2) is placed between the spacer (4) and the glass panes (1). More preferably, the spacer (4) is inset from peripheral edges of the glass panes (1) leading to a space bounded on two sides by the glass panes (1) and on one side by the spacer (4), said space being filled with the secondary sealant (3).

In this regard, the sealer composition (5) is not part of the edge sealing. Moreover, the sealer composition (5) is applied in addition to the edge sealing, in particular in addition to the primary sealant (2) and the secondary sealant (3).

Various modifications and variations of the invention will be apparent to those skilled in the art without departing from the scope of the invention. Although the invention has been described in connection with specific preferred embodiments, it should be understood that the invention as itemed should not be unduly limited to such specific embodiments. Indeed, various modifications of the described modes for carrying out the invention which are obvious to those skilled in the relevant fields are intended to be covered by the present invention.

The following example is merely illustrative of the present invention and should not be construed to limit the scope of the invention as indicated by the appended items in any way.

### Example

The sealer composition (5) defined herein demonstrates, in comparison to products used today in direct contact with edge-sealing, a significantly reduced migration level from a secondary sealer into this sealer composition (5).

For testing the sealer composition (5) defined herein and the sealer composition used today, a quantitative method has been used. In this method a measured (weighed) mass (with a defined surface area) of a secondary sealant (3) from an IG-unit directly on a sealer composition (5) is exposed. The two materials are kept together and exposed to heat (oven at 60 degrees) for a period of 3 weeks. Here after the sample of the secondary sealant (3) is weighed again. The difference between the initial weight and the final weight is calculated into a percentage mass loss from the secondary sealant. This mass loss percentage is the y-axis on the following graph called migration level. The mass loss comes from migration of substance from the secondary sealant (3) into the sealer composition.

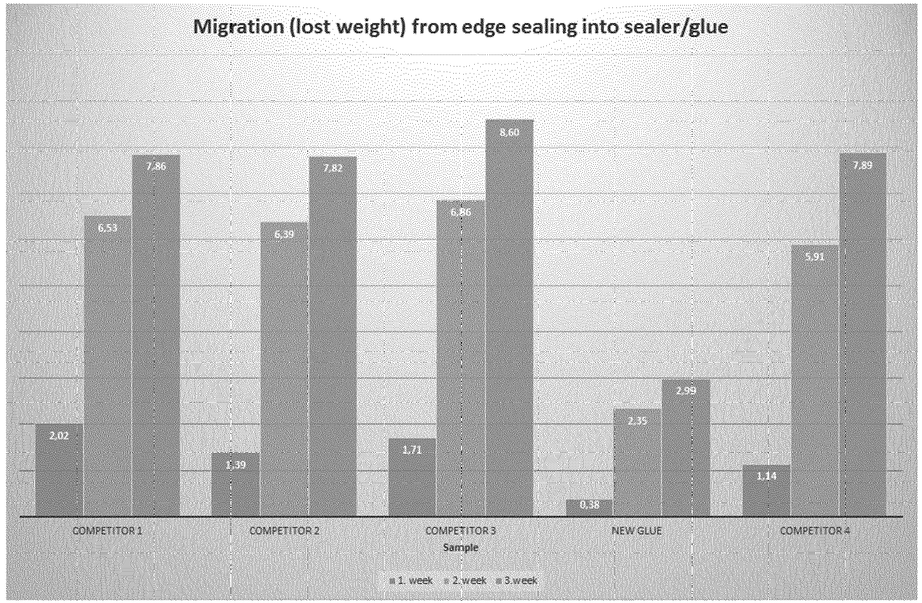

A and b are doubles of the same sample material. Sample 1 (Akameric 1020 by A-Trading Fugekemi A/S), 2 (Tec7) and 5 (Hybrisealg 2PS by Den Brave) are silane modified polymer systems of the prior art containing a calcium carbonate filler, an aminofunctional silane, curing agents and other additives. Sample 3 (POWER MS-P KLÆBER by Berner) is also a silane modified polymer-system with aminofunctional silanes but not containing a calcium carbonate filler. The sealer composition (5) defined herein is sample 4. As can be seen from the graph, the migration level obtained with sample 4 is significantly improved over the other samples.

Sample 4 also performs qualitatively optimal in the Rosenheim test.

The invention is further defined by way of the following items:
1. A one-component sealer composition (5) comprising (a) at least one silane modified polymer as a binder and (b) at least one benzoate as a plasticizer.
2. A sealer composition (5) according to item 1, wherein the sealer composition (5) is for use in contact with edge sealing of insulation glass.
3. A sealer composition (5) according to item 2, wherein the sealer composition (5) is for use in direct contact with edge sealing of insulation glass.
4. A sealer composition (5) according to any of the preceding items, wherein the sealer composition (5) is for use in direct contact with edge sealing of insulation glass, wherein the edge sealing of the insulation glass comprises a primary sealant (2) and a secondary sealant (3) and wherein the sealer composition (5) is applied on the secondary sealant (3).
5. A sealer composition (5) according to any of the preceding items, comprising 5 to 70 % by weight of said plasticizer.
6. A sealer composition (5) according to any of the preceding items, comprising 7 to 65 % by weight of said plasticizer.
7. A sealer composition (5) according to any of the preceding items, comprising 10 to 60 % by weight of said plasticizer, preferably 10, 15, 20, 25, 30, 35, 40, 45, 50, 55 or 60 % by weight.
8. A sealer composition (5) according to any of the preceding items, wherein the plasticizer is selected from the group consisting of benzoic acid esters of diethylene glycol, dipropylene glycol, ethylene glycol, triethylene glycol, tetraethylene glycol, propylene glycol, tripropylene glycol, tetrapropylene glycol, 2,2,4-trimethyl-1,3-pentane diol, isodecanol, 2-ethylhexnol, hydroxypivalic acid neopentyl glycol esters, and mixtures thereof; and is preferably dipropylene glycoldibenzoate or a mixture of diethylene glycolbenzoate and dipropylene glycoldibenzoate.
9. A sealer composition (5) according to any of the preceding items, wherein the plasticizer is dipropylene glycoldibenzoate or a mixture of diethylene glycolbenzoate and dipropylene glycoldibenzoate.
10. A sealer composition (5) according to any of the preceding items, comprising 10 to 50 % by weight of said binder, wherein the sum of the components of the sealer composition (5) totals 100 % by weight.
11. A sealer composition (5) according to any of the preceding items, comprising 15 to 40 % by weight of said binder, wherein the sum of the components of the sealer composition (5) totals 100 % by weight.
12. A sealer composition (5) according to any of the preceding items, comprising 15, 20, 25, 30, 35 or 40 % by weight of said binder, wherein the sum of the components of the sealer composition (5) totals 100 % by weight.
13. A sealer composition (5) according to any of the preceding items, wherein the binder is a moisture curing binder.
14. A sealer composition (5) according to any of the preceding items, wherein the binder is selected from the group consisting of silane modified polyethers, preferably silane modified polyethylene glycol, silane modified polypropylene glycol or silane modified poly(ethylene-co-propylene) glycol; silane modified polyurethanes and silane modified polyesters, and any combination thereof.
15. A sealer composition (5) according to any of the preceding items, wherein the binder is selected from the group consisting of trimethoxy silane, dimethoxy silane, trimethoxy silylpropylcarbamate modified, preferably endcapped or terminated polyethers, polyurethanes, and polyesters.
16. A sealer composition (5) according to any of the preceding items, wherein the binder is a silane endcapped polyether, preferably trimethoxy silane endcapped polyether, preferably a trimethoxy silylpropylcarbamate endcapped polypolyethylene glycol.
17. A sealer composition (5) according to any of the preceding items, wherein the binder has a viscosity of 5000 to 15000 mPa·s, preferably 7000 to 12000 mPa·s, more preferably 10000 mPa·s or about 10000 mPa·s, as measured according to DIN 51562.
18. A sealer composition (5) according to any of the preceding items, wherein the sealer composition (5) comprises (c) at least one crosslinker.
19. A sealer composition (5) according to item 18, comprising 1 to 10 % by weight of said crosslinker, wherein the sum of the components of the sealer composition (5) totals 100 % by weight.
20. A sealer composition (5) according to any of items 18 and 19, comprising 2 to 8 % by weight of said crosslinker, wherein the sum of the components of the sealer composition (5) totals 100 % by weight.
21. A sealer composition (5) according to any of items 18 to 20, comprising 3 to 7 %, preferably 3, 4, 5, 6 or 9 % by weight of said crosslinker, wherein the sum of the components of the sealer composition (5) totals 100 % by weight.
22. A sealer composition (5) according to any of items 18 to 21, wherein the crosslinker is selected from the group consisting of vinyltrimethoxysilane, 3-aminopropyltrimethoxysilane, N-(2-Aminoethyl)-3-aminopropyltrimethoxysilane, N-Cyclohexyl-3-aminopropyltrimethoxysilane, N-Cyclohexylaminomethyltriethoxysilane, 3-Aminopropyltriethoxysilane, 3-(2-Aminomethylamino)Propyltriethoxysilane, N-(2-Aminoethyl)-3-aminopropylmethyldimethoxysilane, 3-Aminopropyltrimethoxysilane, Aminopropyltrimethoxysilane, 3-Ureidopropyltrimethoxysilane, vinyltrimethoxysilane, vinyldimethoxymethylsilane, vinyltriethoxysilane, vinyltriacetoxysilane, phenyltrimethoxysilane, and any combination thereof.
23. A sealer composition (5) according to any of items 18 to 22, wherein the crosslinker is vinyltrimethoxysilane, 3-aminopropyltrimethoxysilane, and any combination thereof.
24. A sealer composition (5) according to any of the preceding items, wherein the sealer composition (5) comprises (d) at least one catalyst.
25. A sealer composition (5) according to item 24, comprising 0·1 to 3 % by weight of said catalyst, wherein the sum of the components of the sealer composition (5) totals 100 % by weight.
26. A sealer composition (5) according to any of items 24 and 25, comprising 0.3 to 2 % by weight of said catalyst, wherein the sum of the components of the sealer composition (5) totals 100 % by weight.
27. A sealer composition (5) according to any of items 24 to 26, comprising 0.4 to 1 %, preferably 0.4, 0.5, 0.6, 0.7, 0.8, 0.9 or 1 % by weight of said catalyst, wherein the sum of the components of the sealer composition (5) totals 100 % by weight.
28. A sealer composition (5) according to any items 24 to 27, wherein the catalyst is selected from the group consisting of tin catalysts, platinum catalysts, titanat catalysts, zirconium catalysts, zink catalysts, bismuth catalysts, iron catalysts, cupper catalysts, nickel catalysts, amine catalysts, and any combination thereof.
29. A sealer composition (5) according to any of items 24 to 28, wherein the catalyst is dibutyltin diacetyl acetonate or dioctyltin dicarboxylate.
30. A sealer composition (5) according to any of the preceding items, wherein the sealer composition (5) comprises (e) at least one filler.
31. A sealer composition (5) according to item 30, comprising 40.5 to 60.5 % by weight of said filler, wherein the sum of the components of the sealer composition (5) totals 100 % by weight.
32. A sealer composition (5) according to any of items 30 and 31, comprising 45.5 to 56.5 % by weight of said filler, wherein the sum of the components of the sealer composition (5) totals 100 % by weight.
33. A sealer composition (5) according to any of items 30 to 32, comprising 45.5 to 55.5 %, preferably 45.5, 46.5, 47.5, 48.5, 49.5, 50.5, 51.5, 52.5, 53.5, 54.5 or 55.5 % by weight of said filler, wherein the sum of the components of the sealer composition (5) totals 100 % by weight.
34. A sealer composition (5) according to any of items 30 to 33, wherein the filler is selected from the group consisting of uncoated calcium carbonate, coated calcium carbonate, in particular coated with fatty acids, aluminum hydroxide; uncoated or coated calcium carbonate further including magnesium and/or aluminuim, and any combination thereof.
35. A sealer composition (5) according to any of items 30 to 34, wherein the filler is calcium carbonate coated with fatty acids or aluminum hydroxide or a mixture thereof.
36. A sealer composition (5) according to any of the preceding items, wherein the sealer composition (5) comprises (f) at least one adhesion promoter.
37. A sealer composition (5) according to item 36, comprising 0.5 to 3 % by weight of said adhesion promoter, wherein the sum of the components of the sealer composition (5) totals 100 % by weight.
38. A sealer composition (5) according to any of items 36 and 37, comprising 0.7 to 2 % by weight of said adhesion promoter, wherein the sum of the components of the sealer composition (5) totals 100 % by weight.
39. A sealer composition (5) according to any of items 36 to 38, comprising 1 to 1.5 % by weight of said adhesion promoter wherein the sum of the components of the sealer composition (5) totals 100 % by weight.
40. A sealer composition (5) according to any of items 36 to 39, wherein the adhesion promoter is selected from the group consisting of 3-aminopropyltrimethoxysilane, N-(2-Aminoethyl)-3-aminopropyltrimethoxysilane, N-Cyclohexyl-3-aminopropyltrimethoxysilane, N-Cyclohexylaminomethyltriethoxysilane, 3-Aminopropyltriethoxysilane, 3-(2-Aminomethylamino)Propyltriethoxysilane, N-(2-Aminoethyl)-3-aminopropylmethyldimethoxysilane, 3-Aminopropyltrimethoxysilane, Aminopropyltrimethoxysilane, 3-Ureidopropyltrimethoxysilane, and any combination thereof.
41. A sealer composition (5) according to any of items 36 to 40, wherein the adhesion promoter is 3-aminopropyltrimethoxysilane.
42. A sealer composition (5) according to any of the preceding items, wherein the sealer composition (5) comprises (g) at least one thickener.
43. A sealer composition (5) according to item 42, comprising 2.5 to 8.5 % by weight of said thickener, wherein the sum of the components of the sealer composition (5) totals 100 % by weight.
44. A sealer composition (5) according to any of items 42 and 43, comprising 3.5 to 7.5 % by weight of said thickener, wherein the sum of the components of the sealer composition (5) totals 100 % by weight.
45. A sealer composition (5) according to any of items 42 to 44, comprising 4.5 to 6.5 % by weight, preferably 5.5 % by weight, of said thickener, wherein the sum of the components of the sealer composition (5) totals 100 % by weight.
46. A sealer composition (5) according to any of items 42 to 45, wherein the thickener is selected from the group consisting of polyamide modified derivatives of castor oil, polyamides, inorganic modified derivatives of castor oil, polyolefin modified polyamide, silica, and any combination thereof.
47. A sealer composition (5) according to any of items 42 to 46, wherein the thickener is polyamide modified derivatives of castor oil and/or silica.
48. A sealer composition (5) according to any of the preceding items, comprising or consisting of (a) at least one silane modified polymer as a binder, (b) at least one benzoate as a plasticizer, (c) at least one crosslinker, (d) at least one catalyst, (e) at least one filler, and (f) at least one adhesion promoter.
49. A sealer composition (5) according to item 48, consisting of 20 % by weight of at least one silane modified polymer as a binder, 20 % by weight of at least one benzoate as a plasticizer, 3 % by weight of at least one crosslinker, 0.5 % by weight of at least one catalyst, 55.5 % by weight of at least one filler, and 1 % by weight of at least one adhesion promoter.
50. A sealer composition (5) according to item 48, consisting of 25 % by weight of at least one silane modified polymer as a binder, 15 % by weight of at least one benzoate as a plasticizer, 3 % by weight of at least one crosslinker, 0.5 % by weight of at least one catalyst, 55.5 % by weight of at least one filler, and 1 % by weight of at least one adhesion promoter.
51. A sealer composition (5) according to item 48, consisting of 15 % by weight of at least one silane modified polymer as a binder, 25 % by weight of at least one benzoate as a plasticizer, 3 % by weight of at least one crosslinker, 0.5 % by weight of at least one catalyst, 55.5 % by weight of at least one filler, and 1 % by weight of at least one adhesion promoter.
52. A sealer composition (5) according to item 48, consisting of 15 % by weight of at least one silane modified polymer as a binder, 35 % by weight of at least one benzoate as a plasticizer, 3 % by weight of at least one crosslinker, 0.5 % by weight of at least one catalyst, 45.5 % by weight of at least one filler, and 1 % by weight of at least one adhesion promoter.
53. A sealer composition (5) according to item 48, consisting of 40 % by weight of at least one silane modified polymer as a binder, 10 % by weight of at least one benzoate as a plasticizer, 3 % by weight of at least one crosslinker, 0.5 % by weight of at least one catalyst, 45.5 % by weight of at least one filler, and 1 % by weight of at least one adhesion promoter.
54. A sealer composition (5) according to any of items 1 to 47, comprising or consisting of (a) at least one silane modified polymer as a binder, (b) at least one benzoate as a plasticizer, (c) at least one crosslinker, (d) at least one catalyst, (f) at least one adhesion promoter and (g) at least one thickener.
55. A sealer composition (5) according to item 54, consisting of 30 % by weight of at least one silane modified polymer as a binder, 60 % by weight of at least one benzoate as a plasticizer, 3 % by weight of at least one crosslinker, 0.5 % by weight of at least one catalyst, 5.5 % by weight of at least one thickener, and 1 % by weight of at least one adhesion promoter.
56. A method of producing a sealer composition (5) as defined in any of items 1 to 55 comprising compounding the components of the sealer composition (5) at room temperature, preferably for a total of 2-3 hours, preferably in a vacuum dissolver.
57. A method of sealing of insulation glass comprising applying a sealer composition (5) as defined in any of items 1 to 55 on an edge sealing of the insulation glass.
58. The method of item 56, comprising applying a sealer composition (5) as defined in any of items 1 to 55 directly on the edge sealing of the insulation glass.
59. The method of items 57 and 58, wherein the edge sealing of the insulation glass comprises a primary sealant (2) and a secondary sealant (3) and wherein the method comprises applying the sealer composition (5) on the secondary sealant (3).
60. The method of any of item 57 to 59, wherein the sealer composition (5) further bonds the insulation glass to a window sash or window frame.
61. Use of a sealer composition (5) as defined in any of items 1 to 55 for sealing of insulation glass.
62. The use of item 61, wherein the sealer composition (5) is applied on an edge sealing of the insulation glass.
63. The use of item 62, wherein the sealer composition (5) is applied directly on the edge sealing of the insulation glass.
64. The use of items 62 and 63, wherein the edge sealing of the insulation glass comprises a primary sealant (2) and a secondary sealant (3) and wherein the sealer composition (5) is applied on the secondary sealant (3).
65. The use of items 61 to 64, wherein the sealer composition (5) is further used for bonding the insulation glass to a window sash or window frame.
66. A window unit comprising an insulating glass unit and a window sash or window frame, wherein the insulating glass unit comprises an edge sealing, the edge sealing comprises a primary sealant (2) and a secondary sealant (3);
   wherein a sealer composition (5) as defined in any of items 1 to 55 is placed at least between the secondary sealant (3) and the window sash or window frame.
67. A window unit according to item 64, wherein the sealer composition (5) bonds the insulating glass unit to the window sash or window frame.
68. A window unit according to item 66 or 67, wherein the insulating glass unit further comprises at least two glass panes (1).
69. A window unit according to item 68, wherein the insulating glass unit further comprises a spacer (4) placed between the glass panes (1).
70. A window unit according to item 69, the primary sealant (2) being placed between the spacer (4) and the glass panes (1).
71. A window unit as defined in item 70, wherein the spacer (4) is inset from peripheral edges of the glass panes (1) leading to a space bounded on two sides by the glass panes (1) and on one side by the spacer (4), said space being filled with the secondary sealant (3).

## Claims

1. A one-component sealer composition comprising (a) at least one silane modified polymer as a binder and (b) at least one benzoate as a plasticizer.

2. A sealer composition according to claim 1, wherein the sealer composition is for use in contact with edge sealing of insulation glass, preferably in direct contact with edge sealing of insulation glass.

3. A sealer composition according to claim 1 or 2, wherein the sealer composition is for use in direct contact with edge sealing of insulation glass, wherein the edge sealing of the insulation glass comprises a primary sealant and a secondary sealant and wherein the sealer composition is applied on the secondary sealant.

4. A sealer composition according to any of the preceding claims, wherein the plasticizer is selected from the group consisting of benzoic acid esters of diethylene glycol, dipropylene glycol, ethylene glycol, triethylene glycol, tetraethylene glycol, propylene glycol, tripropylene glycol, tetrapropylene glycol, 2,2,4-trimethyl-1,3-pentane diol, isodecanol, 2-ethylhexnol, hydroxypivalic acid neopentyl glycol esters, and mixtures thereof; and is preferably dipropylene glycoldibenzoate or a mixture of diethylene glycolbenzoate and dipropylene glycoldibenzoate.

5. A sealer composition according to any of the preceding claims, wherein the binder is selected from the group consisting of silane modified polyethers, preferably silane modified polyethylene glycol, silane modified polypropylene glycol or silane modified poly(ethylene-co-propylene) glycol; silane modified polyurethanes and silane modified polyesters, and any combination thereof.

6. A sealer composition according to any of the preceding claims, wherein the sealer composition comprises (c) at least one crosslinker.

7. A sealer composition according to any of the preceding claims, wherein the sealer composition comprises (d) at least one catalyst.

8. A sealer composition according to any of the preceding claims, wherein the sealer composition comprises (e) at least one filler.

9. A sealer composition according to any of the preceding claims, wherein the sealer composition comprises (f) at least one adhesion promoter.

10. A sealer composition according to any of the preceding claims, wherein the sealer composition comprises (g) at least one thickener.

11. A sealer composition according to any of claims 1 to 5, comprising or consisting of (a) at least one silane modified polymer as a binder, (b) at least one benzoate as a plasticizer, (c) at least one crosslinker, (d) at least one catalyst, (e) at least one filler, and (f) at least one adhesion promoter.

12. A sealer composition according to any of claims 1 to 5, comprising or consisting of (a) at least one silane modified polymer as a binder, (b) at least one benzoate as a plasticizer, (c) at least one crosslinker, (d) at least one catalyst, (f) at least one adhesion promoter and (g) at least one thickener.

13. A method of sealing of insulation glass comprising applying a sealer composition as defined in any of claims 1 to 12 on an edge sealing of the insulation glass, wherein the sealer composition (5) preferably further bonds the insulation glass to a window sash or window frame.

14. Use of a sealer composition as defined in any of claims 1 to 12 for sealing of insulation glass, wherein the sealer composition (5) is preferably further used for bonding the insulation glass to a window sash or window frame.

15. A window unit comprising an insulating glass unit and a window sash or window frame, wherein the insulating glass unit comprises an edge sealing, the edge sealing comprises a primary sealant (2) and a secondary sealant (3);
wherein a sealer composition (5) as defined in any of claims 1 to 12 is placed at least between the secondary sealant (3) and the window sash or window frame.
